# EUROPEAN PATENT SPECIFICATION

(11) **EP 2 357 550 B1**
(45) Date of publication and mention of the grant of the patent: **06.04.2016**
(21) Application number: 11151013.7
(22) Date of filing: 14.01.2011
(51) Int. Cl.: G06F 3/044, G06F 3/041, G06F 3/048, G06F 3/047

(54) **Position detecting device and method**
Positionserkennungsgerät und -verfahren
Dispositif et procédé de détection de position

(30) Priority: 27.01.2010 JP 2010015244
(43) Date of publication of application: 17.08.2011
(73) Proprietor: Wacom Co., Ltd., Saitama, 349-1148 (JP)
(72) Inventor: Sakai, Kiyokazu, Tokyo 164-0012 (JP)
(74) Representative: Appelt, Christian W.

(56) References cited:
- WO-A2-2008/085418
- US-A1- 2009 009 483

## Description

The present invention relates to a device and a method for position detection that detect the position of an indicating object.

### [Background Art]

Conventionally, a position detecting device is known which has a plurality of X-axis electrodes arranged in an X-axis direction and a plurality of Y-axis electrodes arranged in a Y-axis direction, the X-axis electrodes and the Y-axis electrodes being arranged so as to intersect each other. The position detection device sequentially selects the X-axis electrodes and applies a voltage of a predetermined frequency to the X-axis electrodes, and sequentially selects the Y-axis electrodes and processes a signal appearing in each Y-axis electrode (*see* Japanese Patent Laid-Open No. 2009-192306, hereinafter referred to as "Patent Document 1," pages 1 to 12 and FIGS. 1 to 9, for example). When an indicating object such as a finger of a human body or the like approaches a position (cross point) at which an X-axis electrode and a Y-axis electrode intersect each other, a capacitance between the X-axis electrode and the Y-axis electrode changes, and a signal appearing in the Y-axis electrode changes. It is therefore possible to determine the position of the cross point that the indicating object has approached by sequentially selecting the Y-axis electrodes (scanning the Y-axis electrodes) and observing a state of change in a signal appearing in each Y-axis electrode.

WO 2008/085418 and US 2009/009483 show similar position detecting devices.

### [Summary of the Invention]

The position detecting device disclosed in Patent Document 1 sequentially selects the Y-axis electrodes on a signal detecting side. Therefore, when a range as an object of position detection (the area of a scanning region) is enlarged and the number of Y-axis electrodes is increased, one time of scanning, that is, position detection takes time. As for this position detection taking time, the scanning time may be shortened by dividing the scanning region into a plurality of regions, and performing scans in each of the divided regions simultaneously.

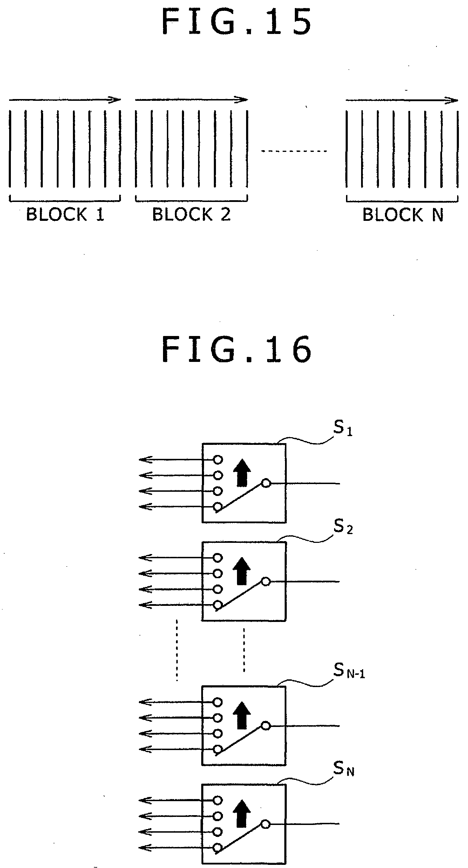

FIG. 15 is a diagram schematically showing an operation in a case where a scanning region is divided into a plurality of regions and scanning is performed in each of the divided regions simultaneously. Suppose in the example shown in FIG. 15 that the entire scanning region is divided into N regions. The divided regions are shown as blocks 1, 2, ..., and N. Vertical lines included in each block represent electrodes (Y-axis electrodes or X-axis electrodes). Arrows arranged above the respective blocks indicate scanning order. By thus performing scans in the respective blocks in parallel with each other, it is possible to shorten the scanning time of the entire scanning region to 1/N, and to increase the speed of position detection.

FIG. 16 is a diagram showing a concrete example of selector switches S₁ to S_{N} used in a case where X-axis electrodes are divided into N groups. As shown in FIG. 16, each of the selector switches S₁ to S_{N} selects X-axis electrodes in order in the same direction (from the bottom to the top).

FIG. 17 is a diagram showing a concrete example of selector switches T₁ to T_{N} used in a case where Y-axis electrodes are divided into N groups. As shown in FIG. 17, each of the selector switches T₁ to T_{N} selects Y-axis electrodes in order in the same direction (from the left to the right).

In a case where a scanning region is divided into a plurality of regions and scanning is performed in each of the divided regions in parallel, when an indicating object moves at a high speed, ranges of detection that should be detected as continuous regions become discontinuous, and there is a concern for erroneous detection being performed as if separate indicating objects were detected.

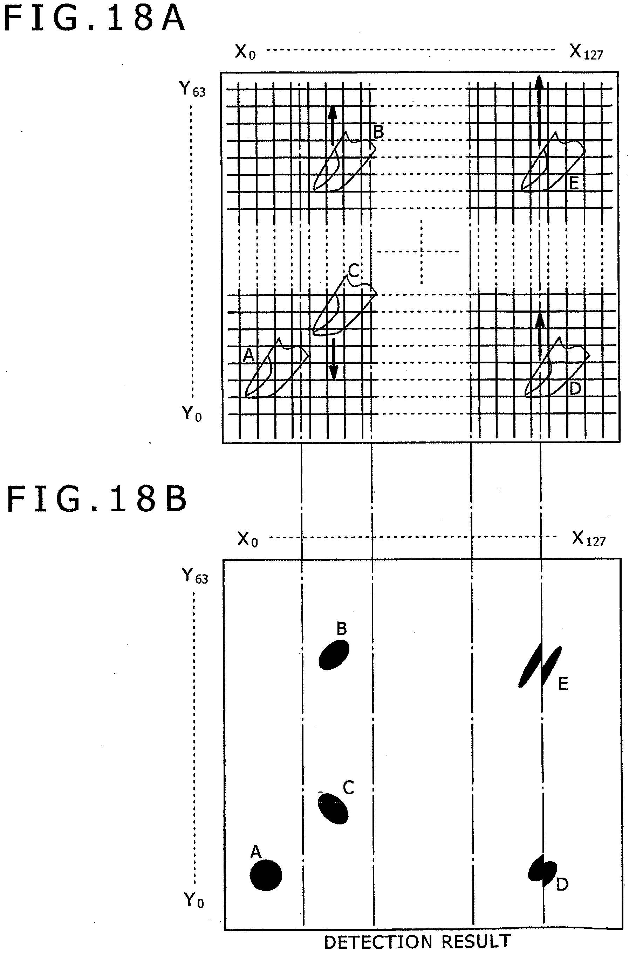

FIGS. 18A and 18B are diagrams of assistance in explaining detection ranges. FIG. 18A shows correspondences between a scanning region and the position of a fingertip (an indicating object) of a human body. In addition, FIG. 18B shows results of detection of the fingertip. In FIGS. 18A and 18B, A, B, and C indicate examples in which the position of the fingertip does not overlap with block boundaries (represented by dashed lines), and D and E indicate examples in which the position of the fingertip overlaps with a block boundary. Incidentally, suppose that electrode selection is made in order from the left to the right.

When the position of the fingertip does not overlap with block boundaries, and the position of the fingertip is stationary, a substantially circular region is obtained as a detection range, as indicated by A. When the position of the fingertip is moving in an upward direction, a region of an elliptic shape having a major axis disposed in a direction of slanting upward to the right is obtained as a detection range, as indicated by B. When the position of the fingertip is conversely moving in a downward direction, a region of an elliptic shape having a major axis disposed in a direction of slanting downward to the right is obtained as a detection range, as indicated by C.

On the other hand, when the position of the fingertip overlaps with a block boundary, and the position of the fingertip is moving in an upward direction, for example, a region of an elliptic shape having a major axis disposed in a direction of slanting upward to the right is obtained as a detection range, which is split along the block boundary, as indicated by D. In this case, when the moving speed of the fingertip is increased, the two regions of the split elliptic shape are completely separated from each other, as indicated by E.

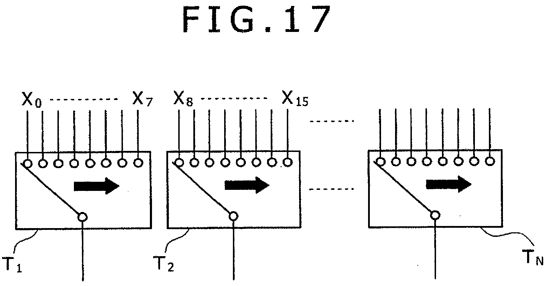

This is a phenomenon caused by performing simultaneous detection in each of a plurality of blocks. When conductors adjacent to each other in different blocks are detected, a difference between the scanning time for each block appears as a delay in a detection result. For example, when attention is directed to blocks to which a conductor X₇ and a conductor X8 belong in FIG. 17, conductors X₀, X₈, ... are first selected to detect signals. Conductors X₁, X₉, ... are next selected to detect signals. Seven changes are made before the conductor X₇ is selected. Thus, a difference corresponding to the time required for seven selections and detections appears between the detection times of the conductor X₇ and the conductor X₈. Therefore, a phenomenon in which detection results are separated occurs when the fingertip is moving while straddling blocks that are adjacent to each other.

Thus, when the position of an indicating object is determined on the basis of a detection result obtained so as to correspond to one scanning time, two regions completely separated from each other are erroneously detected as corresponding to separate indicating objects.

The present invention has been created in view of such points, and in one aspect the present invention provides a device and a method for position detection that can prevent erroneous detection of the position of an indicating object.

In order to solve the above-described problems, a position detecting device according to an aspect of the present invention includes: a first conductor pattern formed of a plurality of conductors arranged in a first direction; a second conductor pattern formed of a plurality of conductors arranged in a second direction intersecting the first direction; a signal detecting section configured to detect a signal occurring in at least one of the first conductor pattern and the second conductor pattern on a basis of position indication by an indicating object; and a conductor selecting section configured to select the plurality of conductors forming at least one of the first conductor pattern and the second conductor pattern, the plurality of conductors being sectioned into at least a first conductor group and a second conductor group adjacent to each other, such that a direction of selecting each of the conductors forming the first conductor group and a direction of selecting each of the conductors forming the second conductor group are different from each other. In particular, it is desirable that the conductor selecting section selects the plurality of conductors such that timings of selecting conductors arranged on adjacent sides of the first conductor group and the second conductor group coincide with each other.

In a case where a plurality of conductors forming a conductor pattern are sectioned into a first conductor group and a second conductor group, a conductor is selected in each of the conductor groups, and the selected conductor is changed in a predetermined direction and, further, directions of changing (switching) conductors in the two respective conductor groups adjacent to each other are set different from each other. Therefore, timings of selecting conductors in the vicinity of a boundary between the two conductor groups can be made to coincide with each other. Even when the indicating object moves, the splitting of a region detected so as to correspond to the indicating object as a result of the timings of changing (switching) the conductors being shifted from each other is avoided, and erroneous detection of the position of the indicating object can be prevented.

In one aspect, it is desirable that a signal transmitting section configured to supply a signal be connected to the above-described first conductor pattern, and that the second conductor pattern be sectioned into the first conductor group and the second conductor group, and connected with the signal detecting section. When the second conductor pattern on a signal detecting side is sectioned, a temporal shift in detection of signals of conductors disposed in the vicinity of a boundary between the conductor groups adjacent to each other can be reduced, and erroneous detection of the position of the indicating object as a result of timings of changing (switching) conductors being shifted from each other can be prevented.

In one aspect, it is desirable that the above-described first conductor pattern be sectioned into the first conductor group and the second conductor group, and connected with a multi-frequency signal supplying section configured to supply signals of different frequencies to the first conductor group and the second conductor group, respectively, in parallel with each other, and that the second conductor pattern be connected with the signal detecting section. When the first conductor pattern on a signal supplying side is sectioned, a temporal shift in supply of signals to conductors disposed in the vicinity of a boundary between the conductor groups adjacent to each other can be reduced, and erroneous detection of the position of the indicating object as a result of timings of changing (switching) conductors being shifted from each other can be prevented.

In one aspect, the sectioning of the first conductor pattern and the sectioning of the second conductor pattern as described above may be performed at the same time. Also in this case, erroneous detection of the position of the indicating object as a result of timings of changing (switching) conductors being shifted from each other can be prevented.

In one aspect, it is desirable that the above-described conductor selecting section reverse each of the direction of selecting each of the conductors forming the first conductor group and the direction of selecting each of the conductors forming the second conductor group each time one round of selecting the conductors has been completed. When the selecting orders are reversed, by averaging signals obtained by repeating one round of selecting operation a number of times, a distortion of a detection range when the indicating object moves can be alleviated, and erroneous detection can be further prevented.

In one aspect, it is desirable that the above-described conductor selecting section make selection of conductors in at least one of the first conductor group and the second conductor group, such that a plurality of conductors that are adjacent to each other are selected. This way, the level of signals detected by the signal detecting section can be increased, and detection accuracy can be improved due to an improvement in signal receiving sensitivity.

### [Brief Description of the Drawings]

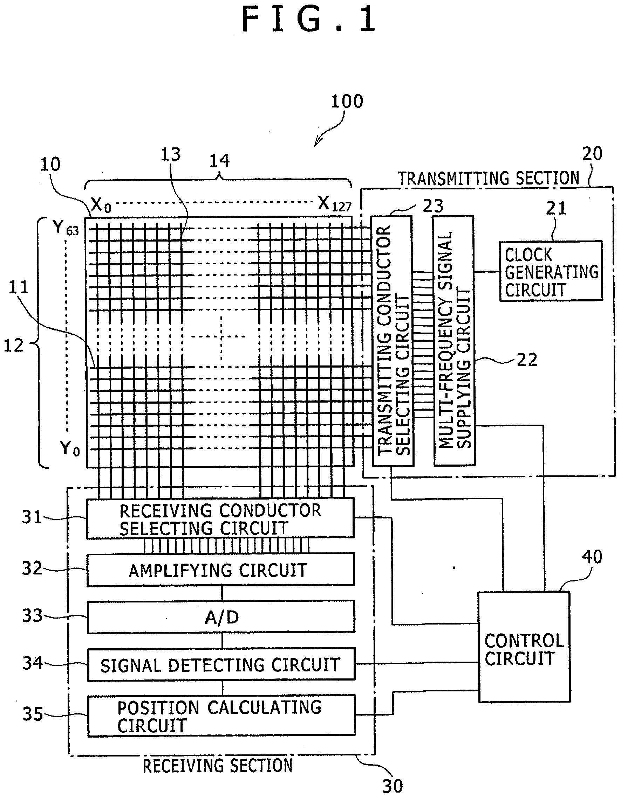

- FIG. 1: is a diagram showing a general configuration of a position detecting device according to an embodiment.

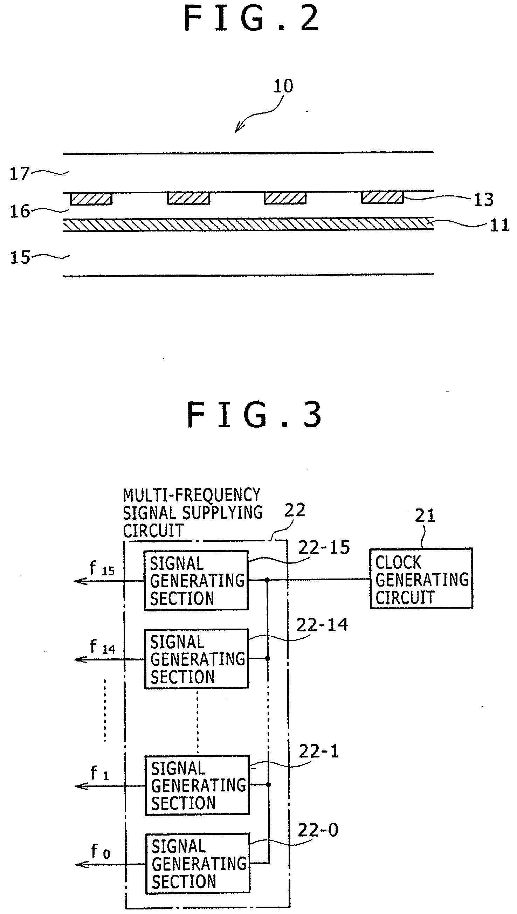

- FIG. 2: is a sectional view of a sensor section.
- FIG. 3: is a diagram showing a detailed configuration of a multi-frequency signal supplying circuit.

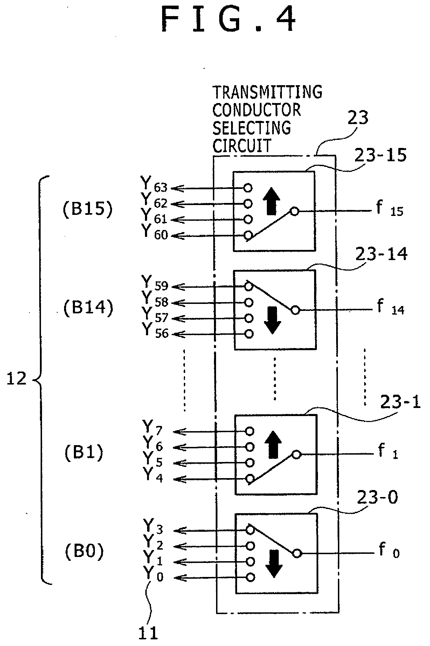

- FIG. 4: is a diagram showing a detailed configuration of a transmitting conductor selecting circuit.

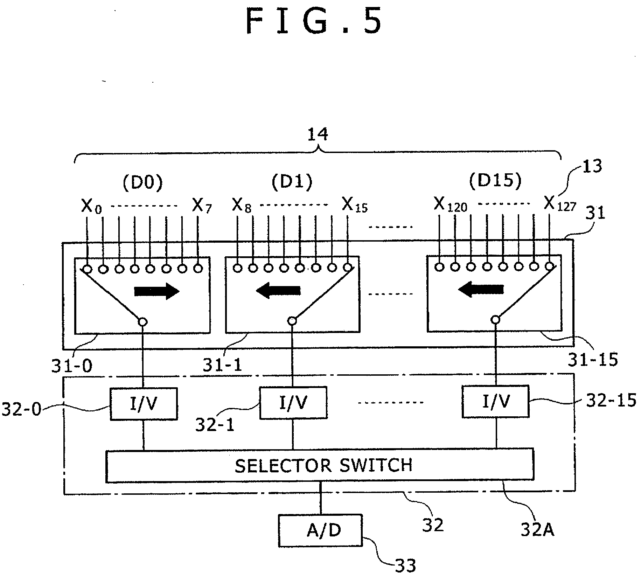

- FIG. 5: is a diagram showing a detailed configuration of a receiving conductor selecting circuit and an amplifying circuit.

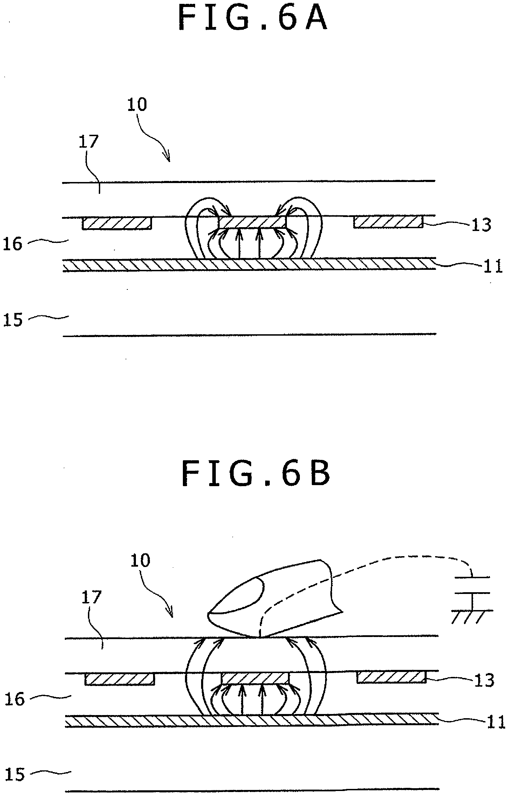

- FIGS. 6A and 6B: are diagrams of assistance in explaining signal levels detected by a signal detecting circuit.

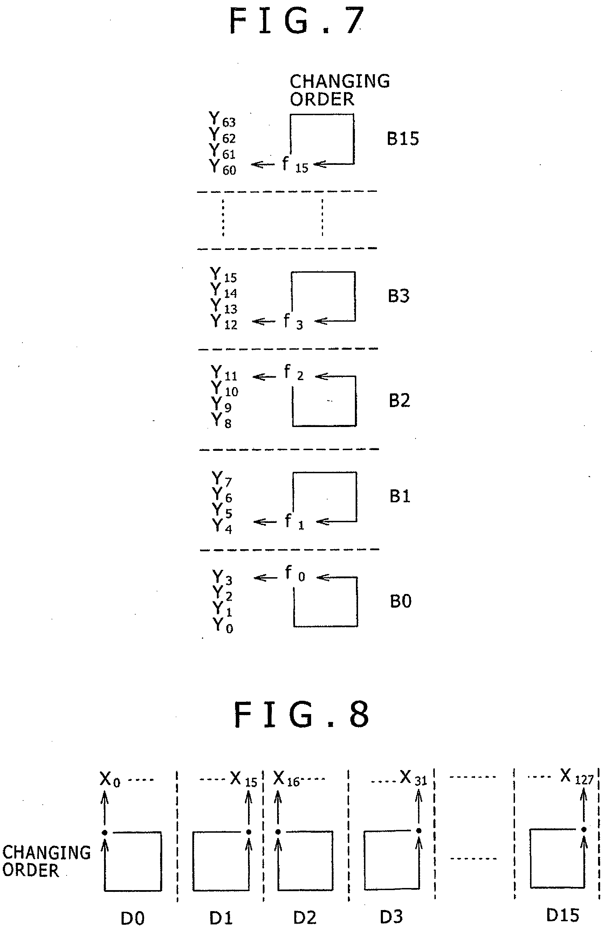

- FIG. 7: is a diagram showing changing order in each of selector switches provided on the side of a transmitting conductor group.
- FIG. 8: is a diagram showing changing order in each of selector switches provided on the side of a receiving conductor group.

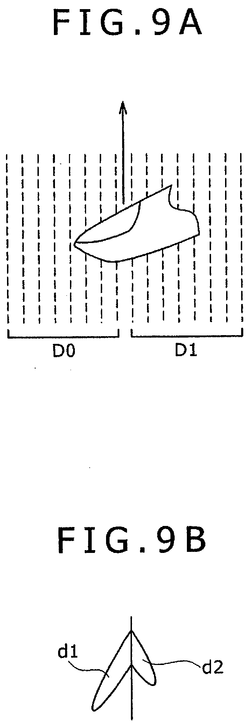

- FIGS. 9A and 9B: are diagrams showing a detection result in a case where a fingertip placed on a sensor section so as to include a boundary between two blocks moves in an upward direction at a high speed.

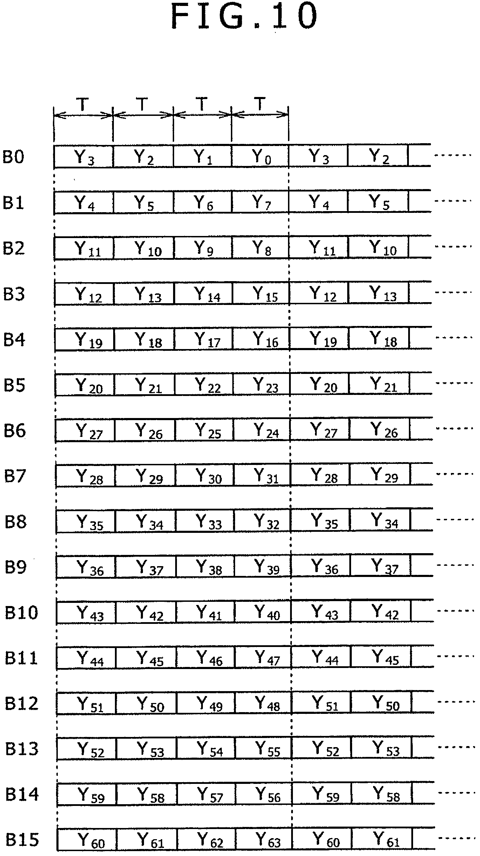

- FIG. 10: is a diagram showing timing of changing (switching) transmitting conductors.

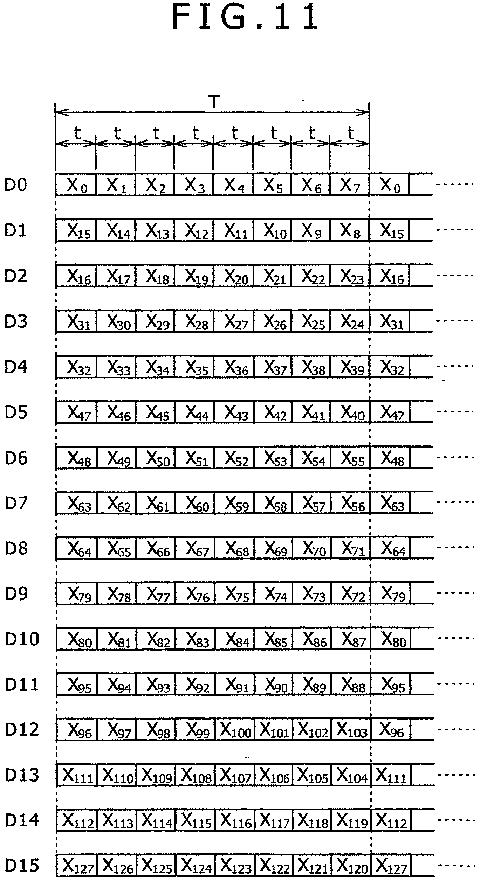

- FIG. 11: is a diagram showing timing of changing (switching) receiving conductors.

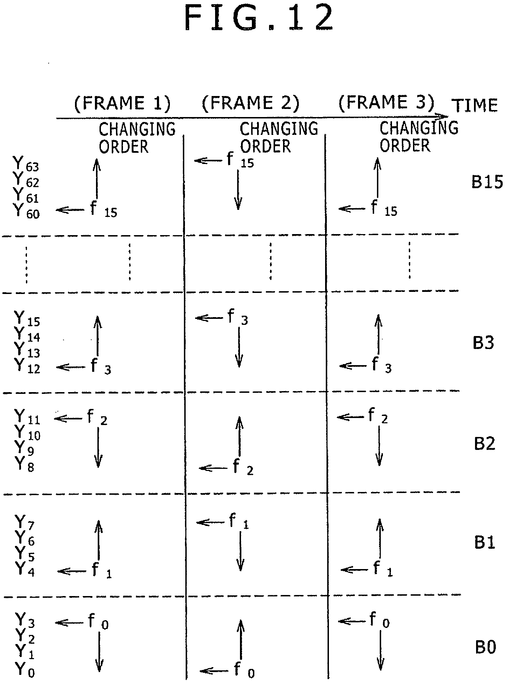

- FIG. 12: is a diagram showing a concrete changing order in a case where the order of changing conductors on the side of the transmitting conductor group is reversed in each frame.

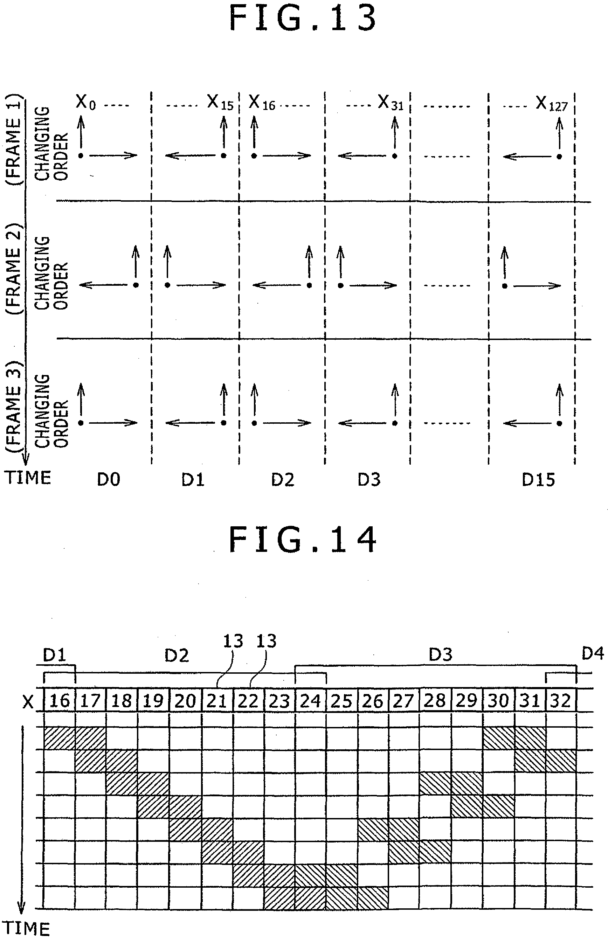

- FIG. 13: is a diagram showing a concrete changing order in a case where the order of changing conductors on the side of the receiving conductor group is reversed in each frame.
- FIG. 14: is a diagram showing a concrete changing order when two receiving conductors are selected simultaneously.
- FIG. 15: is a diagram schematically showing operation in a case where a scanning region is divided into a plurality of regions and scanning is performed in each of the divided regions simultaneously.
- FIG. 16: is a diagram showing a concrete example of selector switches used in a case where X-axis electrodes are divided into N groups.
- FIG. 17: is a diagram showing a concrete example of selector switches used in a case where Y-axis electrodes are divided into N groups.
- FIGS. 18A and 18B: are diagrams of assistance in explaining detection ranges.

### [Detailed Description of the Invention]

A position detecting device according to an embodiment of the present invention will hereinafter be described with reference to the drawings.

### (First Embodiment)

FIG. 1 is a diagram showing a general configuration of a position detecting device according to a first embodiment. As shown in FIG. 1, the position detecting device 100 according to the present embodiment is to detect the position of an indicating object formed by a finger of a human body or the like, and includes a sensor section 10, a transmitting section 20, a receiving section 30, and a control circuit 40. Incidentally, the "indicating object" includes a pen that has a conductor at a tip section and that is detected by drawing up an electrostatic field through a path connected to a ground via a human body on the same principle as that of finger detection, and a pen that transmits a signal from the pen itself.

The sensor section 10 has a conductor pattern composed of a transmitting conductor group 12 (first conductor pattern) formed of a plurality of transmitting conductors 11 arranged at equal intervals in a predetermined direction (first direction) and a receiving conductor group 14 (second conductor pattern) formed of a plurality of receiving conductors 13 arranged at equal intervals in a direction (second direction) orthogonal to the arrangement direction of the plurality of transmitting conductors 11.

FIG. 2 is a sectional view of the sensor section 10, and shows a partial cross section along one transmitting conductor 11. As shown in FIG. 2, a first glass substrate 15, the transmitting conductor 11, a spacer 16, a receiving conductor 13, and a second glass substrate 17 are laminated in this order, and are formed so as to detect the position of an indicating object when the indicating object approaches the surface of the second glass substrate 17.

The transmitting conductor 11 and the receiving conductor 13 have a flat plate shape, and are for example formed by using a transparent electrode film made of an ITO (Indium Tin Oxide) film, a copper foil or the like. In the present embodiment, 64 transmitting conductors 11 are arranged in a vertical direction (Y-direction) at predetermined intervals (for example intervals of 3.2 mm). In addition, 128 receiving conductors 13 are arranged in a horizontal direction (X-direction) at predetermined intervals (for example intervals of 3.2 mm). In FIG. 1, Y₀ to Y₆₃ correspond to the 64 transmitting conductors 11, respectively, and the transmitting conductors 11 are arranged in the order of Y₀ to Y₆₃. In addition, X₀ to X₁₂₇ correspond to the 128 receiving conductors 13, respectively, and the receiving conductors 13 are arranged in the order of X₀ to X₁₂₇.

The spacer 16 is an insulator, and is for example formed by using PVB (PolyVinyl Butyral), EVA (Ethylene Vinyl Acetate), silicone rubber or the like. A sheet-shaped (film-shaped) base material of synthetic resin or the like may instead be used for the first and second glass substrates 15 and 17.

The transmitting section 20 shown in FIG. 1 includes a clock generating circuit 21, a multi-frequency signal supplying circuit 22, and a transmitting conductor selecting circuit 23. The clock generating circuit 21 generates a reference signal of a predetermined frequency. The multi-frequency signal supplying circuit 22 generates 16 kinds of signals of frequencies f₀, f₁, ..., and f₁₅ using the reference signal output from the clock generating circuit 21, and outputs these signals in parallel with each other.

FIG. 3 is a diagram showing a detailed configuration of the multi-frequency signal supplying circuit 22. The multi-frequency signal supplying circuit 22 includes 16 signal generating sections 22-0, 22-1, ..., and 22-15 for generating the 16 kinds of signals of the frequencies f₀, f₁, ..., and f₁₅ separately. The signal generating sections 22-0 to 22-15 generate the signals of the frequencies f₀ to f₁₅ on the basis of the reference signal output from the clock generating circuit 21. For example, the signal generating sections 22-0 to 22-15 generate the signals of the predetermined frequencies by frequency-dividing or multiplying the reference signal output from the clock generating circuit 21. Alternatively, the signal generating sections 22-0 to 22-15 have a waveform data ROM that stores waveform data of sine waves having periods different from each other, and generate sine wave signals of the frequencies f₀ to f₁₅ by reading out the waveform data in synchronism with the reference signal output from the clock generating circuit 21.

The transmitting conductor selecting circuit 23 selects transmitting conductors 11 as destinations of supply of the 16 signals output in parallel with each other from the multi-frequency signal supplying circuit 22, and changes (switches) the transmitting conductors 11 as the selected destinations in order.

FIG. 4 is a diagram showing a detailed configuration of the transmitting conductor selecting circuit 23. The transmitting conductor selecting circuit 23 includes 16 selector switches 23-0, 23-1, ..., and 23-15 to which the 16 kinds of signals of the frequencies f₀, f₁, ..., and f₁₅ are input separately from each other. In the present embodiment, the 64 transmitting conductors 11 are divided and grouped (sectioned) into 16 blocks B0 to B15. One of two blocks adjacent to each other corresponds to a first conductor group, and the other of the two corresponds to a second conductor group.

The block B0 includes four transmitting conductors 11 indicated by Y₀ to Y₃, which are arranged adjacent to each other. The selector switch 23-0 repeatedly changes a transmitting conductor 11 as a destination of supply of the signal of the frequency f₀ output from the signal generating section 22-0 in order of Y₃, Y₂, Y_{1,} and Y₀ at predetermined time intervals. Incidentally, in FIG. 4, a direction of changing a transmitting conductor 11 is indicated by an arrow shown within the selector switches 23-0 to 23-15.

The block B1 includes four transmitting conductors 11 indicated by Y₄ to Y₇, which are arranged adjacent to each other. The selector switch 23-1 repeatedly changes a transmitting conductor 11 as a destination of supply of the signal of the frequency f₁ output from the signal generating section 22-1 in order of Y₄, Y₅, Y₆, and M₇ at predetermined time intervals.

The same applies to the other blocks B2 to B15 and the other selector switches 23-2 to 23-15. The selector switches 23-2 to 23-15 each repeatedly change a transmitting conductor 11 as a destination of supply of the signal output from the corresponding signal generating section 22-2 to 22-15 in predetermined order and at predetermined time internals. Incidentally, details of the order of changing the transmitting conductors 11 in the selector switches 23-0 to 23-15 will be described later.

The receiving section 30 shown in FIG. 1 includes a receiving conductor selecting circuit 31, an amplifying circuit 32, an analog-to-digital converter circuit (A/D) 33, a signal detecting circuit 34, and a position calculating circuit 35.

FIG. 5 is a diagram showing a detailed configuration of the receiving conductor selecting circuit 31 and the amplifying circuit 32. The receiving conductor selecting circuit 31 includes 16 selector switches 31-0, 31-1, ..., and 31-15 for selecting eight corresponding receiving conductors 13 in order. In the present embodiment, the 128 receiving conductors 13 are divided and grouped (sectioned) into 16 blocks D0 to D15. One of two blocks adjacent to each other corresponds to a first conductor group, and the other of the two corresponds to a second conductor group.

The block D0 includes eight receiving conductors 13 indicated by X₀ to X₇, which are arranged adjacent to each other. The selector switch 31-0 selects one of the eight receiving conductors 13, and repeatedly changes the selection state in order of X₀, X₁, X₂, X₃, X₄, X₅, X₆, and X₇ at predetermined time intervals. Incidentally, in FIG. 5, a direction of changing a receiving conductor 13 is indicated by an arrow shown within the selector switches 31-0 to 31-15.

The block D1 includes eight receiving conductors 13 indicated by X₈ to X₁₅, which are arranged adjacent to each other. The selector switch 31-1 selects one of the eight receiving conductors 13, and repeatedly changes the selection state in order of X₁₅, X₁₄, X₁₃, X₁₂, X₁₁, X₁₀, X₉, and X₈ at predetermined time intervals.

The same applies to the other blocks D2 to D15 and the other selector switches 31-2 to 31-15. The selector switches 31-2 to 31-15 each select one of eight receiving conductors 13 arranged adjacent to each other and included in the corresponding block D2 to D15, and repeatedly change the selection state in predetermined order and at predetermined time intervals. Incidentally, details of the order of changing the receiving conductors 13 in the selector switches 31-0 to 31-15 will be described later.

The amplifying circuit 32 includes 16 current-to-voltage converter circuits (I/V) 32-0, 32-1, ..., and 32-15 and a selector switch 32A. The current-to-voltage converter circuits 32-0 to 32-15 are each in one-to-one correspondence with the selector switches 31-0 to 31-15. Each of the current-to-voltage converter circuits 32-0 to 32-15 amplifies a current I output from a receiving conductor 13 selected by the corresponding selector switch 31-0 or the like with a predetermined gain, and converts the current I into a voltage V. The selector switch 32A selects signals (voltages) output from the 16 current-to-voltage converter circuits 32-0 to 32-15 in order, and inputs the signals to the analog-to-digital converter circuit 33.

The analog-to-digital converter circuit 33 converts the respective output voltages of the 16 current-to-voltage converter circuits 32-0 to 32-15, which voltages are selected in order by the selector switch 32A, into data of a predetermined number of bits.

The signal detecting circuit 34 detects signal levels of 16 respective kinds of components of the frequencies f₀, f₁, ..., and f₁₅ output from the multi-frequency signal supplying circuit 22 on the basis of the data output from the analog-to-digital converter circuit 33.

FIGS. 6A and 6B are diagrams of assistance in explaining signal levels detected by the signal detecting circuit 34. FIG. 6A shows a state in which a finger of a human body as an indicating object has not approached a cross point of a transmitting conductor 11 and a receiving conductor 13 (a position where the transmitting conductor 11 and the receiving conductor 13 intersect each other). FIG. 6B shows a state in which a finger has approached the cross point. As shown in FIG. 6A, in the state in which the finger has not approached the cross point, the transmitting conductor 11 and the receiving conductor 13 are capacitively coupled to each other via the spacer 16 at the cross point, and an electric field emitted from the transmitting conductor 11 converges to the receiving conductor 13. Thus, when a signal of a predetermined frequency (one of frequencies f₀ to f₁₅) is supplied to the transmitting conductor 11, a current corresponding to the degree of the capacitive coupling can be extracted from the receiving conductor 13 capacitively coupled to the transmitting conductor 11. On the other hand, as shown in FIG. 6B, in the state in which the finger has approached the cross point, while a current can be extracted from the receiving conductor 13 as in the case of the state in which the finger has not approached the cross point, the degree of capacitive coupling between the transmitting conductor 11 and the receiving conductor 13 differs from that of the case of the state in which the finger has not approached the cross point. That is, because a part of an electric field emitted from the transmitting conductor 11 converges to the finger, the degree of the capacitive coupling between the transmitting conductor 11 and the receiving conductor 13 is weakened, and the current extracted from the receiving conductor 13 is decreased.

In the present embodiment, 16 transmitting conductors 11 intersecting one receiving conductor 13 are respectively supplied with 16 kinds of signals of the frequencies f₀, f₁, ..., and f₁₅ in parallel with each other. Thus, data corresponding to the receiving conductor 13 includes these 16 kinds of frequency components. The signal detecting circuit 34 extracts these 16 kinds of frequency components separately from each other (for example, extracts the frequency components by performing synchronous detection), and detects a signal level corresponding to each of the frequency components.

The signal level detected by the signal detecting circuit 34 is stored so as to be associated with the position of the cross point. For example, combinations of Y₀ to Y₆₃ identifying the transmitting conductors 11 and X₀ to X₁₂₇ identifying the receiving conductors 13 are set as addresses indicating the positions of cross points, and combinations of the addresses and signal levels corresponding to the cross points are stored. Incidentally, when 16 kinds of frequency components included in a signal output from one receiving conductor 13 are considered, it is known which of the transmitting conductors 11 is supplied with a signal in each of the blocks B0 to B15 of the transmitting conductor group 12 at that point in time, so that the transmitting conductor 11 as a destination of supply of the signal at each frequency can be identified.

The position calculating circuit 35 calculates a cross point whose signal level is lowered as a position that a finger has approached, each time one round of changing operations of the selector switches 23-0 to 23-15 within the transmitting conductor selecting circuit 23 and changing operations of the selector switches 31-0 to 31-15 within the receiving conductor selecting circuit 31 has been completed, that is, each time upon completing an operation of detecting signal levels corresponding to all the cross points where all the transmitting conductors 11 of the transmitting conductor group 12 and all the receiving conductors 13 of the receiving conductor group 14 in the sensor section 10 intersect each other.

The transmitting conductor selecting circuit 23 and the receiving conductor selecting circuit 31 described above correspond to a conductor selecting section. The amplifying circuit 32, the analog-to-digital converter circuit 33, and the signal detecting circuit 34 correspond to a signal detecting section. In addition, the clock generating circuit 21 and the multi-frequency signal supplying circuit 22 correspond to a signal transmitting section and a multi-frequency signal supplying section.

Description will next be made of the order of changing transmitting conductors 11 in the selector switches 23-0 to 23-15 and the order of changing receiving conductors 13 in the selector switches 31-0 to 31-15. In the present embodiment, the order of changing the transmitting conductor 11 in each of the blocks B0 to B15 of the transmitting conductor group 12 is set such that the order of changing the transmitting conductor 11 in blocks adjacent to each other is in opposite directions from each other. In addition, the order of changing the receiving conductor 13 in each of the blocks D0 to D 15 of the receiving conductor group 14 is set such that the order of changing the receiving conductor 13 in blocks adjacent to each other is in opposite directions from each other.

FIG. 7 is a diagram showing the changing order in each of the selector switches 23-0 to 23-15 provided on the side of the transmitting conductor group 12. The selector switch 23-0 corresponding to the block B0 changes the transmitting conductor 11 as a destination of supply of a signal in order of Y₃, Y₂, Y₁, and Y₁. The selector switch 23-1 corresponding to the block B1 changes the transmitting conductor 11 as a destination of supply of a signal in order of Y₄, Y₅, Y₆, and Y₇, which order is the reverse of the changing order of each transmitting conductor 11 in the adjacent block B0. Similarly, the selector switch 23-2 corresponding to the block B2 changes the transmitting conductor 11 as a destination of supply of a signal in order of Y₁₁, Y₁₀, Y₉, and Y₈, which order is the reverse of the changing order of each transmitting conductor 11 in the adjacent block B1. The selector switch 23-3 corresponding to the block B3 changes the transmitting conductor 11 as a destination of supply of a signal in order of Y₁₂, Y₁₃, Y₁₄, and Y₁₅, which order is the reverse of the changing order of each transmitting conductor 11 in the adjacent block B2. Thus, the selector switch corresponding to each of the blocks B0 through B15 changes the transmitting conductor 11 as a destination of supply of a signal in the reverse of the changing order of each transmitting conductor 11 in the adjacent block.

By thus performing the operation of changing the transmitting conductor 11, when attention is directed to two blocks adjacent to each other, timings in which two transmitting conductors 11 adjacent to each other in the two blocks (two transmitting conductors 11 indicated by Y₃ and Y₄ when attention is directed to the block B0 and the block B1, for example) are selected can be made to coincide with each other. Therefore, even when the finger is moving at a high speed, it is possible to prevent a range of detection of the finger in the two blocks adjacent to each other from being split into two regions as indicated by E in FIG. 18B.

FIG 8 is a diagram showing the changing order in each of the selector switches 31-0 to 31-15 provided on the side of the receiving conductor group 14. The selector switch 31-0 corresponding to the block D0 changes the receiving conductor 13 from which to extract a signal in order of X₀, X₁, X₂, X₃, X₄, X₅, X₆, and X₇. The selector switch 31-1 corresponding to the block D1 changes the receiving conductor 13 from which to extract a signal in order of X₁₅, X₁₄, X₁₃, X₁₂, X₁₁, X₁₀, X₉, and X₈, which order is the reverse of the changing order of each receiving conductor 13 in the adjacent block D0. Similarly, the selector switch 31-2 corresponding to the block D2 changes the receiving conductor 13 from which to extract a signal in order of X₁₆, X₁₇, X₁₈, X₁₉, X₂₀, X₂₁, X₂₂, and X₂₃, which order is the reverse of the changing order of each receiving conductor 13 in the adjacent block D1. The selector switch 31-3 corresponding to the block D3 changes the receiving conductor 13 from which to extract a signal in order of X₃₁, X₃₀, X₂₉, X₂₈, X₂₇, X₂₆, X₂₅, and X₂₄, which order is the reverse of the changing order of each receiving conductor 13 in the adjacent block D2. Thus, the selector switch corresponding to each of the blocks D0 through D15 changes the receiving conductor 13 from which to extract a signal in the reverse of the changing order of each receiving conductor 13 in the adjacent block.

By thus performing the operation of changing the receiving conductor 13, when attention is directed to two blocks adjacent to each other, timings in which two receiving conductors 13 adjacent to each other in the two blocks (two receiving conductors 13 indicated by X₁₅ and X₁₆ when attention is directed to the block D1 and the block D2, for example) are selected can be made to coincide with each other. Therefore, even when the finger is moving at a high speed, it is possible to prevent a range of detection of the finger in the two blocks adjacent to each other from being split into two regions as indicated by E in FIG. 18B.

FIGS. 9A and 9B are diagrams showing a detection result in a case where a fingertip is placed on the sensor section 10 so as to include a boundary between the two blocks D0 and D1, and further where the position of the fingertip moves in an upward direction at a high speed. As described above, receiving conductors are changed in directions toward the boundary between the two blocks D0 and D1. Thus, when the fingertip placed so as to include the boundary moves in the upward direction at a high speed as shown in FIG. 9A, the positions of detection of the fingertip are shifted in the upward direction as the positions approach the boundary, as shown in FIG. 9B. However, detection ranges d1 and d2 corresponding to the two blocks D0 and D1, respectively, are not split from each other.

FIG. 10 is a diagram showing timing of changing transmitting conductors 11. In FIG. 10, T is a time interval (cycle) of changing the selection state of transmitting conductors 11. Because four transmitting conductors 11 are included in each block of the transmitting conductor group 12, changing operations on the four transmitting conductors 11 are performed in a time of 4 T, and thereafter the changing operations are repeated in the same order in a time of 4T.

FIG. 11 is a diagram showing timing of changing receiving conductors 13. In FIG. 11, t is a time interval (cycle) of changing the selection state of receiving conductors 13. Because eight receiving conductors 13 are included in each block of the receiving conductor group 14, changing operations on the eight receiving conductors 13 are performed in a time of 8 t, and thereafter the changing operations are repeated in the same order in a time of 8 t. In addition, the time of 8 t corresponds to the changing cycle T of the transmitting conductors 11.

Transmitting conductors 11 are changed each time one round of the changing operation on the eight receiving conductors 13 has been completed.

Thus, in the position detecting device 100 according to the present embodiment, when the plurality of transmitting conductors 11 and the plurality of receiving conductors 13 are each divided into a plurality of blocks (groups), and a transmitting conductor 11 or a receiving conductor 13 is selected in each of the blocks and the selected conductor is changed in a predetermined direction, directions of changing conductors in two blocks adjacent to each other are made opposite from each other. Therefore, timings of selecting conductors in the vicinity of a boundary between the two blocks can be made to coincide with each other. Even when an indicating object moves, the splitting of a region detected so as to correspond to the indicating object as a result of the timings of changing (switching) the conductors being shifted from each other is avoided, and erroneous detection of the position of the indicating object can be prevented.

When the receiving conductors 13 side for detecting electrical characteristics are grouped, a temporal shift in detection of the electrical characteristics of receiving conductors 13 disposed in the vicinity of a boundary between blocks adjacent to each other can be reduced, and erroneous detection of the position of the indicating object as a result of timings of changing receiving conductors 13 being shifted from each other can be prevented.

When the transmitting conductors 11 side for supplying signals of predetermined frequencies are grouped, a temporal shift in supply of signals to transmitting conductors 11 disposed in the vicinity of a boundary between blocks adjacent to each other can be reduced, and erroneous detection of the position of the indicating object as a result of timings of changing transmitting conductors 11 being shifted from each other can be prevented.

### (Second Embodiment)

In the first embodiment, the changing of transmitting conductors 11 in each of the selector switches 23-0 to 23-15 provided on the side of the transmitting conductor group 12 and the changing of receiving conductors 13 in each of the selector switches 31-0 to 31-15 provided on the side of the receiving conductor group 14 are performed in a fixed direction at all times. For example, when attention is directed to the selector switch 23-0 corresponding to the block B0 on the side of the transmitting conductor group 12, a transmitting conductor 11 as a destination of supply of a signal is changed in order of Y₃, Y₂, Y₁, and Y₀ at all times. In addition, when attention is directed to the selector switch 31-0 corresponding to the block D0 on the side of the receiving conductor group 14, a receiving conductor 13 from which to extract a signal is changed in order of X₀, X₁, X₂, X₃, X₄, X₅, X₆, and X₇ at all times. The changing order, however, may be reversed each time one round of changing (switching) the conductors has been completed.

FIG. 12 is a diagram showing a concrete changing order in a case where the order of changing conductors in the selector switches 23-0 to 23-15 provided on the side of the transmitting conductor group 12 is reversed in each frame. Incidentally, a length of time taken to complete the selection of all the transmitting conductors 11 included in each block corresponds to one frame (the same is true for FIG. 13). For example, when attention is directed to the block B0, the transmitting conductor 11 is changed in order of Y₃, Y₂, Y₁, and Y₀ in a first frame. In a second frame, the changing order is reversed, and the transmitting conductor 11 is changed in order of Y₀, Y₁, Y₂, and Y₃. Thereafter, in a third and odd subsequent frames, the transmitting conductor 11 is changed in the same order as in the first frame, and in a fourth and even subsequent frames, the transmitting conductor 11 is changed in the same order as in the second frame.

FIG. 13 is a diagram showing a concrete changing order in a case where the order of changing conductors in the selector switches 31-0 to 31-15 provided on the side of the receiving conductor group 14 is reversed in each frame. For example, when attention is directed to the block D₀, the receiving conductor 13 is changed in order of X₀, X₁, X₂, X₃, X₄, X₅, X₆, and X₇ in the first frame. In the second frame, the changing order is reversed, and the receiving conductor 13 is changed in order of X₇, X₆, X₅, X₄, X₃, X₂, X₁, and X₀. Thereafter, in the third and odd subsequent frames, the receiving conductor 13 is changed in the same order as in the first frame, and in the fourth and even subsequent frames, the receiving conductor 13 is changed in the same order as in the second frame.

Thus, when the conductor changing directions are reversed in each frame, a distortion of a detection range when the detected object moves on the surface of the sensor section 10 can be alleviated by averaging between frames. Incidentally, the method of reversing the changing order of the transmitting conductors 11 on the side of the transmitting conductor group 12 in each frame as illustrated in FIG. 12 and the method of reversing the changing order of the receiving conductors 13 on the side of the receiving conductor group 14 in each frame as illustrated in FIG. 13 may be performed at the same time, or only one of the methods may be performed.

### (Third Embodiment)

In each of the above-described embodiments, a signal is selectively supplied to one transmitting conductor 11 within each block. However, a signal may be simultaneously supplied to two (or a larger number of) transmitting conductors 11. When a signal is simultaneously supplied to two transmitting conductors 11, signal levels (current values) output from receiving conductors 13 are increased, so that an SN (signal-to-noise) ratio can be improved.

In addition, in each of the above-described embodiments, a current value output from one receiving conductor 13 is detected within each block. However, current values output from two (or a larger number of) receiving conductors 13 adjacent to each other may be detected. In this case, receiving sensitivity can be improved.

Incidentally, when a signal is simultaneously supplied to two transmitting conductors 11, it is desirable, partly from a viewpoint of matching an aspect ratio of detection data, that current values output from two receiving conductors 13 be detected simultaneously. In one aspect, when a signal is simultaneously supplied to two transmitting conductors 11, as compared with a case of supplying a signal to one transmitting conductor 11, the curve (envelope) of a detection signal corresponding to a detected object becomes gentle (looks blurred), and changes in level of the detection signal between detection cross points are smoothed, so that linearity is improved. That is, when a fingertip moves while lightly touching the surface of the sensor section 10, contact coordinates can be calculated with an effect of smoothing the changes.

FIG. 14 is a diagram showing a concrete changing order when two receiving conductors 13 are selected simultaneously. In the figure, numbers "16 to 32" correspond to receiving conductors 13 indicated by X₁₆ to X₃₂. FIG. 14 shows the changing order of each receiving conductor 13 with attention directed mainly to two blocks D2 and D3 adjacent to each other. One transmitting conductor 11 (X₂₄) present on a boundary between the two blocks D2 and D3 adjacent to each other belongs to both the blocks D2 and D3, and is selected in predetermined timing in each block. In the example shown in FIG. 14, in the block D2, the receiving conductors 13 are selected and changed in twos in order of arrangement of the transmitting conductors 13. On the other hand, in the next block D3, while the transmitting conductors 13 are similarly selected in twos, the order in which the transmitting conductors 13 are selected is not the arrangement order, but transmitting conductors 13 are changed in a zigzag manner such that the changing order is partially reversed with respect to the arrangement order. It is thereby possible to avoid selecting the receiving conductor 13 (X₂₄), which is included in common in the two blocks D2 and D3, simultaneously in the two blocks D2 and D3.

Incidentally, while receiving conductors 13 are changed in a zigzag manner in only the block D3 of the two blocks D2 and D3 in the example shown in FIG. 14, similar changes may be made in both the blocks D2 and D3 such that timings of selecting the common receiving conductor 13 (X₂₄) are shifted from each other. In addition, while a concrete example of a method of changing receiving conductors 13 has been described in the example shown in FIG. 14, transmitting conductors 11 may be changed in a similar manner.

It is to be noted that the present invention is not limited to the foregoing embodiments, but that various modifications can be made without departing from the spirit of the present invention. For example, while description has been made of a case where the transmitting conductors 11 are orthogonal to the receiving conductors 13 in each of the above-described embodiments, the present invention is also applicable to cases where the transmitting conductors 11 intersect the receiving conductors 13 at angles other than 90 degrees.

In addition, in each of the above-described embodiments, the eight receiving conductors 13 included in each block of the receiving conductor group 14 are selected during the cycle T of changing transmitting conductors 11. However, conversely, four transmitting conductors 11 included in each block of the transmitting conductor group 12 may be selected during the cycle t of changing receiving conductors 13.

In each of the above-described embodiments, the transmitting conductor group 12 and the receiving conductor group 14 are both grouped into 16 blocks. However, the number of blocks can be changed, and the number of blocks of the transmitting conductor group 12 and the number of blocks of the receiving conductor group 14 may differ from each other. In addition, a configuration for simultaneously detecting a current in each of the receiving conductors 13 included in the receiving conductor group 14 may be provided to omit the changing operation on the side of the receiving conductors 13.

In each of the above-described embodiments, a multi-frequency signal is assumed as a signal to be supplied to the side of the transmitting conductors 11. However, the signal to be supplied may be a signal other than the multi-frequency signal. For example, similar effects can be obtained in a position detecting device in which a plurality of spread code signals, specifically spread spectrum codes, are supplied to transmitting conductors 11 that have been divided into each block. Similar effects can be obtained in a position detecting device in which a specific spreading code is shifted in phase and supplied to transmitting conductors 11 that have been divided into each block.

In each of the above-described embodiments, the present invention is applied to the position detecting device 100 of the capacitance type, which supplies a signal to the side of the transmitting conductors 11 and detects current output from the side of the receiving conductors 13. However, the present invention is also applicable to a position detecting device of the capacitance type, which detects respective capacitance values of two kinds of conductors (electrodes) intersecting each other to thereby detect the position of an indicating object, as disclosed in Japanese Patent Laid-Open No. 2009-162538, for example. In addition, the present invention is applicable to position detecting devices using systems other than the capacitance system as long as the position detecting devices change (switch) conductors in order.

According to the present invention, in a case where a plurality of conductors forming a conductor pattern are divided into a plurality of groups, a conductor is selected in each of the groups, and the selected conductor is changed in a predetermined direction, and the directions of changing conductors in two respective groups adjacent to each other are set opposite from each other. Therefore, timings of selecting conductors in the vicinity of a boundary between the two groups can be made to coincide with each other. Even when an indicating object moves, the splitting of a region detected so as to correspond to the indicating object as a result of the timings of changing the conductors .being shifted from each other is avoided, and erroneous detection of the position of the indicating object can be prevented.

## Claims

1. A position detecting device comprising:
a first conductor pattern formed of a plurality of conductors arranged in a first direction;
a second conductor pattern formed of a plurality of conductors arranged in a second direction intersecting said first direction;
a signal detecting section configured to detect a signal occurring in at least one of said first conductor pattern and said second conductor pattern on a basis of position indication by an indicating object; and
a conductor selecting section configured to select the plurality of conductors forming at least one of said first conductor pattern and said second conductor pattern, said selected plurality of conductors being sectioned into at least a first conductor group and a second conductor group adjacent to each other, **characterized in that** a direction of selecting each of the conductors forming said first conductor group and a direction of selecting each of the conductors forming said second conductor group are different from each other, wherein
said conductor selecting section selects said plurality of conductors such that timings of selecting conductors arranged on adjacent sides of said first conductor group and said second conductor group coincide with each other.

2. The position detecting device according to claims 1, further comprising:
a signal transmitting section configured to supply a signal and connected to said first conductor pattern,
wherein said second conductor pattern is sectioned into said first conductor group and said second conductor group, and connected with said signal detecting section.

3. The position detecting device according to one of the preceding claims,
wherein said first conductor pattern is sectioned into said first conductor group and said second conductor group, and connected with a multi-frequency signal supplying section configured to supply signals of different frequencies to said first conductor group and said second conductor group, respectively, in parallel with each other, and wherein said second conductor pattern is connected with said signal detecting section.

4. The position detecting device according to one of the preceding claims,
wherein said first conductor pattern is sectioned into said first conductor group and said second conductor group, and connected with a multi-frequency signal supplying section configured to supply signals of different frequencies to said first conductor group and said second conductor group, respectively, in parallel with each other, and wherein said second conductor pattern is sectioned into said first conductor group and said second conductor group, and connected with said signal detecting section.

5. The position detecting device according to any one of the preceding claims,
wherein the signal occurring in at least one of said first conductor pattern and said second conductor pattern on the basis of position indication by said indicating object is a current value, and
wherein said signal detecting section detects said current value by converting said current value into a voltage value.

6. The position detecting device according to one of the preceding claims, wherein said conductor selecting section reverses each of the direction of selecting each of the conductors forming said first conductor group and the direction of selecting each of the conductors forming said second conductor group each time one round of selection of the conductors forming one group has been completed.

7. The position detecting device according to one of the preceding claims, wherein said conductor selecting section makes selection of said conductors in at least one of said first conductor group and said second conductor group by selecting a plurality of said conductors together that are adjacent to each other.

8. The position detecting device according to one of the preceding claims, which is of a capacitance type.

9. A position detecting method performed by a position detecting device, said position detecting device including a first conductor pattern formed of a plurality of conductors arranged in a first direction and a second conductor pattern formed of a plurality of conductors arranged in a second direction intersecting said first direction, said position detecting method comprising the steps of:
selecting the plurality of conductors forming at least one of said first conductor pattern and said second conductor pattern, said plurality of selected conductors being sectioned into at least a first conductor group and a second conductor group adjacent to each other, such that a direction of selecting each of the conductors forming said first conductor group and a direction of selecting each of the conductors forming said second conductor group are different from each other; wherein the step of selecting the plurality of conductors comprises selecting the conductors such that timings of selecting conductors arranged on adjacent sides of said first conductor group and said second conductor group coincide with each other, and
detecting a signal occurring in at least one of said first conductor pattern and said second conductor pattern on a basis of position indication by an indicating object.

## Patentansprüche

1. Positionserkennungsvorrichtung, umfassend:
ein erstes Leitermuster, das aus mehreren Leitern gebildet ist, die in einer ersten Richtung angeordnet sind;
ein zweites Leitermuster, das aus mehreren Leitern gebildet ist, die in einer zweiten Richtung angeordnet sind, die die erste Richtung schneidet;
einen Signalerkennungsabschnitt, der konfiguriert ist, ein Signal zu erkennen, das in mindestens einem des ersten Leitermusters und des zweiten Leitermusters auf der Grundlage einer Positionsangabe durch ein Anzeigeobjekt auftritt; und
einen Leiterauswahlabschnitt, der konfiguriert ist, die mehreren Leiter auszuwählen, die mindestens eines des ersten Leitermusters und des zweiten Leitermusters bilden, wobei die mehreren ausgewählten Leiter in mindestens eine erste Leitergruppe und eine zweite Leitergruppe unterteilt sind, die benachbart zueinander liegen,
**dadurch gekennzeichnet, dass** eine Auswahlrichtung jedes der Leiter, die die erste Leitergruppe bilden, und/oder eine Auswahlrichtung jedes der Leiter, die die zweite Leitergruppe bilden, verschieden voneinander sind,
wobei der Leiterauswahlabschnitt die mehreren Leiter derart auswählt, dass Zeiteinstellungen des Auswählens von Leitern, die auf benachbarten Seiten der ersten Leitergruppe und der zweiten Leitergruppe angeordnet sind, miteinander übereinstimmen.

2. Positionserkennungsvorrichtung nach Anspruch 1, ferner umfassend:
einen Signalübertragungsabschnitt, der konfiguriert ist, ein Signal zuzuführen, und mit dem ersten Leitermuster verbunden ist,
wobei das zweite Leitermuster in die erste Leitergruppe und die zweite Leitergruppe unterteilt ist und mit dem Signalerkennungsabschnitt verbunden ist.

3. Positionserkennungsvorrichtung nach einem der vorhergehenden Ansprüche,
wobei das erste Leitermuster in die erste Leitergruppe und die zweite Leitergruppe unterteilt ist und mit einem Mehrfrequenz-Signalzuführabschnitt verbunden ist, der konfiguriert ist, Signale von unterschiedlichen Frequenzen der ersten Leitergruppe bzw. der zweiten Leitergruppe parallel zueinander zuzuführen, und wobei das zweite Leitermuster mit dem Signalerkennungsabschnitt verbunden ist.

4. Positionserkennungsvorrichtung nach einem der vorhergehenden Ansprüche,
wobei das erste Leitermuster in die erste Leitergruppe und die zweite Leitergruppe unterteilt ist und mit einem Mehrfrequenz-Signalzuführabschnitt verbunden ist, der konfiguriert ist, Signale von unterschiedlichen Frequenzen der ersten Leitergruppe bzw. der zweiten Leitergruppe parallel zueinander zuzuführen, und wobei das zweite Leitermuster in die erste Leitergruppe und die zweite Leitergruppe unterteilt und mit dem Signalerkennungsabschnitt verbunden ist.

5. Positionserkennungsvorrichtung nach einem der vorhergehenden Ansprüche,
wobei das Signal, das in mindestens einem des ersten Leitermusters und des zweiten Leitermusters auf der Grundlage einer Positionsangabe durch ein Anzeigeobjekt auftritt, ein Stromwert ist, und
wobei der Signalerkennungsabschnitt den Stromwert durch Umwandeln des Stromwerts in einen Spannungswert erkennt.

6. Positionserkennungsvorrichtung nach einem der vorhergehenden Ansprüche,
wobei der Leiterauswahlabschnitt jede der Auswahlrichtung jedes der Leiter, die die erste Leitergruppe bilden, und der Auswahlrichtung jedes der Leiter, die die zweite Leitergruppe bilden, jedes Mal umgekehrt, wenn eine Auswahlrunde der Leiter, die eine Gruppe bilden, abgeschlossen wurde.

7. Positionserkennungsvorrichtung nach einem der vorhergehenden Ansprüche,
wobei der Leiterauswahlabschnitt eine Auswahl der Leiter in mindestens einer der ersten Leitergruppe und der zweiten Leitergruppe trifft, indem mehrere der Leiter, die benachbart zueinander liegen, zusammen ausgewählt werden.

8. Positionserkennungsvorrichtung nach einem der vorhergehenden Ansprüche, die vom Kapazitätstyp ist.

9. Verfahren zur Positionserkennung, das von einer Positionserkennungsvorrichtung ausgeführt wird, wobei die Positionserkennungsvorrichtung ein erstes Leitermuster, das aus mehreren Leitern gebildet ist, die in einer ersten Richtung angeordnet sind, und ein zweites Leitermuster aufweist, das aus mehreren Leitern gebildet ist, die in einer zweiten Richtung angeordnet sind, die die erste Richtung schneidet, wobei das Verfahren zur Positionserkennung die folgenden Schritte umfasst:
Auswählen der mehreren Leiter, die mindestens einen des ersten Leitermusters und des zweiten Leitermusters bilden, wobei die mehreren ausgewählten Leiter in mindestens eine erste Leitergruppe und eine zweite Leitergruppe, die benachbart zueinander liegen, unterteilt sind, sodass eine Auswahlrichtung jeder der Leiter, die die erste Leitergruppe bilden, und eine Auswahlrichtung jeder der Leiter, die die zweite Leitergruppe bilden, verschieden voneinander sind; wobei der Schritt des Auswählens der mehreren Leiter das derartige Auswählen der Leiter umfasst, dass Zeiteinstellungen des Auswählens von Leitern, die auf benachbarten Seiten der ersten Leitergruppe und der zweiten Leitergruppe angeordnet sind, miteinander übereinstimmen, und
Erkennen eines Signals, das in mindestens einem des ersten Leitermusters und des zweiten Leitermusters auf der Grundlage einer Positionsangabe durch ein Anzeigeobjekt auftritt.

## Revendications

1. Dispositif de détection de position comprenant :
un premier motif conducteur formé d'une pluralité de conducteurs disposés selon une première direction ;
un second motif conducteur formé d'une pluralité de conducteurs disposés selon une seconde direction coupant ladite première direction ;
une section de détection de signal configurée pour détecter un signal survenant dans au moins un dudit premier motif conducteur et dudit second motif conducteur sur la base d'une indication de position par un objet d'indication ; et
une section de sélection de conducteur configurée pour sélectionner la pluralité de conducteurs formant au moins un dudit premier motif conducteur et dudit second motif conducteur, ladite pluralité sélectionnée de conducteurs étant scindée en au moins un premier groupe de conducteurs et un second groupe de conducteurs adjacents entre eux, **caractérisé en ce qu'**une direction de sélection de chacun des conducteurs formant ledit premier groupe de conducteurs et une direction de sélection de chacun des conducteurs formant ledit second groupe de conducteurs sont différentes l'une de l'autre, où
ladite section de sélection de conducteur sélectionne ladite pluralité de conducteurs de manière à ce que des temps de sélection de conducteurs disposés sur des côtés adjacents dudit premier groupe de conducteurs et dudit second groupe de conducteurs coïncident entre eux.

2. Dispositif de détection de position selon la revendication 1, comprenant en outre :
une section de transmission de signal configurée pour délivrer un signal et connectée audit premier motif conducteur,
où ledit second motif conducteur est scindé en ledit premier groupe de conducteurs et ledit second groupe de conducteurs, et connecté avec ladite section de détection de signal.

3. Dispositif de détection de position selon l'une des revendications précédentes, dans lequel ledit premier motif conducteur est scindé en ledit premier groupe de conducteurs et ledit second groupe de conducteurs, et connecté à une section de délivrance de signaux multifréquences configurée pour délivrer des signaux de différentes fréquences audit premier groupe de conducteurs et audit second groupe de conducteurs, respectivement, en parallèle l'un avec l'autre, et où ledit second motif conducteur est connecté avec ladite section de détection de signal.

4. Dispositif de détection de position selon l'une des revendications précédentes, dans lequel ledit premier motif conducteur est scindé en ledit premier groupe de conducteurs et ledit second groupe de conducteurs, et connecté à une section de délivrance de signaux multifréquences configurée pour délivrer des signaux de différentes fréquences audit premier groupe de conducteurs et audit second groupe de conducteurs, respectivement, en parallèle l'un avec l'autre, et où ledit second motif conducteur est scindé en ledit premier groupe de conducteurs et ledit second groupe de conducteurs, et connecté avec ladite section de détection de signal.

5. Dispositif de détection de position selon l'une quelconque des revendications précédentes, dans lequel le signal survenant dans au moins un dudit premier motif conducteur et dudit second motif conducteur sur la base d'une indication de position par ledit objet d'indication est une valeur de courant, et
dans lequel ladite section de détection de signal détecte ladite valeur de courant en convertissant ladite valeur de courant en une valeur de tension.

6. Dispositif de détection de position selon l'une des revendications précédentes, dans lequel ladite section de sélection de conducteur inverse chacune de la direction de sélection de chacun des conducteurs formant ledit premier groupe de conducteurs et de la direction de sélection de chacun des conducteurs formant ledit second groupe de conducteurs à chaque fois qu'un cycle de sélection des conducteurs formant un groupe arrive à terme.

7. Dispositif de détection de position selon l'une des revendications précédentes, dans lequel ladite section de sélection de conducteur effectue une sélection desdits conducteurs dans au moins un dudit premier groupe de conducteurs et dudit second groupe de conducteurs en sélectionnant ensemble une pluralité desdits conducteurs qui sont adjacents les uns aux autres.

8. Dispositif de détection de position selon l'une des revendications précédentes, lequel est de type capacitif.

9. Procédé de détection de position exécuté par un dispositif de détection de position, ledit dispositif de détection de position comprenant un premier motif conducteur formé d'une pluralité de conducteurs disposés selon une première direction et un second motif conducteur formé d'une pluralité de conducteurs disposés selon une seconde direction coupant ladite première direction, ledit procédé de détection de position comprenant les étapes suivantes :
sélectionner la pluralité de conducteurs formant au moins un dudit premier motif conducteur et dudit second motif conducteur, ladite pluralité de conducteurs sélectionnés étant scindée en au moins un premier groupe de conducteurs et un second groupe de conducteurs adjacents entre eux, de manière à ce qu'une direction de sélection de chacun des conducteurs formant ledit premier groupe de conducteurs et une direction de sélection de chacun des conducteurs formant ledit second groupe de conducteurs sont différentes l'une de l'autre, où
l'étape de sélection de la pluralité de conducteurs comprend de sélectionner les conducteurs de manière à ce que des temps de sélection de conducteurs disposés sur des côtés adjacents dudit premier groupe de conducteurs et dudit second groupe de conducteurs coïncident entre eux, et
détecter un signal survenant dans au moins un dudit premier motif conducteur et dudit second motif conducteur sur la base d'une indication de position par un objet d'indication.
